# EUROPEAN PATENT APPLICATION

(11) **EP 4 686 714 A1**
(43) Date of publication of application: **04.02.2026**
(21) Application number: 24461606.6
(22) Date of filing: 30.07.2024
(51) Int. Cl.: C05D 3/00, C05D 9/02, C05F 5/00, C05F 7/00, C09K 17/40

(54) **A COMPOSITION OF A MULTI- INGREDIENT FERTILIZER, AN AGGLOMERATED MULTI-INGREDIENT FERTILIZER AND A METHOD FOR PRODUCING AN AGGLOMERATED MULTI-INGREDIENT FERTILIZER**

(71) Applicant: WKG Sp. z o.o., 98-355 Raciszyn (PL)
(72) Inventor: SKUTA, Ireneusz, 25-357 Kielce (PL); JEDRYSIAK, Joanna, 98-324 Wierzchlas (PL); WODZYNSKA, Malwina, 05-827 Grodzisk Mazowiecki (PL)
(74) Representative: Kancelaria Eupatent.pl Sp. z o.o.

(57) **Abstract**

A composition of a multi-ingredient fertilizer, comprising: at least 75 wt% of a carbonate-clay powder, at least 5 wt% of organic additives, and at least 0.2 wt% of a sulphate sulphur. In another aspect, the invention relates to an agglomerated multi-ingredient fertilizer comprising the composition of the multi-ingredient fertilizer according to the invention. In another aspect, the invention relates to a method for producing the agglomerated multi-ingredient fertilizer according to the invention, wherein production of the agglomerated multi-ingredient fertilizer is performed by agglomeration, in particular by pelletization or by granulation.

## Description

### TECHNICAL FIELD

The present invention relates to multi-ingredient fertilizers, especially calcium fertilizers. Additionally, the invention relates to methods for producing pelletized multi-ingredient fertilizers, especially calcium fertilizers.

### BACKGROUND

Soil acidification is a significant agricultural problem, primarily driven by factors such as the extensive use of nitrogen-based fertilizers, acid rain, and the leaching of basic cations. Acidified soils can adversely affect crop yields by impairing nutrient availability and increasing the solubility of toxic elements like aluminium. This necessitates the use of calcium fertilizers to neutralize soil acidity and restore optimal pH levels.

Calcium fertilizers, such as lime (calcium carbonate), are essential for balancing the pH of acidified soils. Calcium plays a critical role in soil structure, nutrient uptake, and root development. However, the application of calcium fertilizers alone may not address all the nutritional deficiencies and structural issues in soils.

While calcium fertilizers are effective in neutralizing soil acidity, their use can be associated with several problems. Excessive application of calcium fertilizers can lead to soil alkalinity, negatively affecting nutrient availability (Ca(OH)₂ or CaO form of lime). Another problem is that a traditional calcium fertilizers like lime react slowly, requiring time to show effects (CaCOs form, fraction 0-2 mm). Moreover, calcium fertilizers primarily supply calcium and do not address deficiencies of other essential nutrients.

The decline of organic matter in soils is another critical issue, exacerbated by intensive farming practices. Organic matter is vital for soil health, influencing water retention, nutrient availability, and microbial activity.

To counteract the decline of organic matter, farmers often use organic amendments such as compost, manure, and cover crops. However, these measures have their own set of challenges such as inconsistent quality, high labour intensity and slow decomposition delaying the availability of nutrients.

Sulphur is another essential nutrient for plant growth, involved in protein synthesis and enzyme function. Modern agricultural practices and reduced atmospheric deposition have led to sulphur deficiencies in soils.

To address sulphur deficiency, farmers use sulphur-containing fertilizers such as ammonium sulphate and gypsum. However, these solutions also have limitations related to the potential for soil acidification and leaching, which can pose a threat to the environment.

Multi-ingredient calcium fertilizers are designed to provide a balanced supply of calcium along with other essential nutrients such as sulphur, magnesium, and trace elements. These fertilizers aim to address multiple soil health issues simultaneously, improving overall soil fertility and crop productivity.

Despite their potential benefits, currently available multi-ingredient calcium fertilizers face several challenges. Formulating a fertilizer that provides the right balance of nutrients for diverse soil types and crops is complex. Ensuring the chemical compatibility of different nutrients within a single fertilizer product is difficult. Uniform application of multi-ingredient fertilizers is challenging, leading to uneven nutrient distribution. Moreover, multi-ingredient fertilizers are usually more expensive than single-nutrient options.

It would be expedient, to develop a composition of a multi-ingredient calcium fertilizer that would allow neutralizing the pH of acidified soil and providing additional essential nutrients to the soil. Preferably, such fertilizer should be in a form that allows it to be easily stored and evenly distributed to fields.

### SUMMARY

In one aspect, the invention relates to a composition of a multi-ingredient fertilizer comprising: at least 75 wt% of a carbonate-clay powder, at least 5 wt% of organic additives, and at least 0.2 wt% of sulphate sulphur.

Preferably, the composition of the multi-ingredient fertilizer comprises: 94.8 wt% of the carbonate-clay powder, 5 wt% of the organic additives, and 0.2 wt% of the sulphate sulphur.

Preferably, the composition of the multi-ingredient fertilizer comprises the carbonate-clay powder, the organic additives, and the sulphate sulphur in a mass ratio of 4:1:0.1275.

In the disclosed composition of the multi-ingredient fertilizer the carbonate-clay powder is a source of calcium carbonate (CaCOs). In addition to calcium carbonate, the carbonate-clay powder contains minerals preferably affecting soil structure, minerals with soil-forming and water-storing properties. Calcium carbonate is a preferable source of calcium, which is particularly well suited for regulating the soil pH in light soils. This is due to the fact that calcium carbonate does not dry out the soil or bind it into so-called "runoff fractions". This is important for improving water retention in light soils, which is often a significant problem. The carbonate-clay powder forms the base of the multi-ingredient fertilizer composition and helps give it the right structure.

Preferably, the carbonate-clay powder is ground to a grain size of less than 100 microns. The high degree of fineness of the carbonate-clay powder provides high reactivity and solubility.

The organic additives are a source of organic carbon, biogenic elements and other organic compounds crucial to ensuring good soil quality and fertility. Many agricultural lands are characterized by low organic matter abundance. Taking this into account, it is reasonable to increase its content in the soil by adding humus-forming organic materials. The organic additives can include municipal sewage sludge, digestate from biogas production, waste from the agri-food industry or biocarbon made from various biological materials.

Preferably, the organic additives are sewage sludge. The sewage sludge, especially from domestic wastewater, is generally uncontaminated with potentially toxic trace elements, and when stabilized with lime, the sludge will not rot and is partially or completely free of microorganisms. Thus, the sewage sludge can successfully replace natural fertilizers, if they meet regulatory requirements, when the mass of standard manure is insufficient. The reason for the problems with the availability of manure is the declining livestock population. The sewage sludge, obtained from the treatment of wastewater from both households and service and industrial operations, is a rich source of nitrogen and phosphorus compounds and other nutrients, such as sodium, which is in short supply in soils, translating into its deficiency in plant products and feedstuffs. The use of the sewage sludge can help improve the abundance of soils in assimilable forms of nitrogen compounds, phosphorus and other nutrients. Therefore, the use of the sewage sludge provides an alternative and easily available source of the organic additives for use in the multi-ingredient fertilizer according to the invention.

The sulphate sulphur is a source of readily available sulphur, which is becoming increasingly scarce in soils. Ensuring adequate levels of sulphur compounds in the soil is key to achieving optimal plant growth and keeping plants healthy.

Preferably, the sulphate sulphur is calcium sulphate (CaSO₄). Calcium sulphate occurs in nature in mineral form as anhydrite (anhydrous salt) and gypsum (dihydrate), among others. However, a preferable source of calcium sulphate used in the multi-ingredient fertilizer according to the invention is waste calcium sulphate.

The use of waste organic matter (sewage sludge) as organic additives and the management of waste sulphate sulphur (calcium sulphate) are part of a closed-loop economy.

In another aspect, the invention relates to an agglomerated multi-ingredient fertilizer comprising the composition of the multi-ingredient fertilizer as described herein. The main objectives of agglomerating the multi-ingredient fertilizer according to the invention were to improve its flowability, density and transport properties, increase particle size and mass to enable safe and uniform spreading, reduce dust and dust content in transport and processing, produce non-segregating mixtures, and give the particles important assumed physicochemical properties. Methods of agglomerating fertilizers are known in the state of the art and, as such, are not the subject of the invention.

Preferably, the agglomerated multi-ingredient fertilizer is a pelletized multi-ingredient fertilizer or a granulated multi-ingredient fertilizer. The pellets and granules dissolve more slowly in the soil and are easier to apply and store than the loose form of fertilizer.

In another aspect, the invention relates to a method for producing the agglomerated multi-ingredient fertilizer as described herein, wherein production of the agglomerated multi-ingredient fertilizer is performed by agglomeration, in particular by pelletization or by granulation.

### DETAILED DESCRIPTION

The following detailed description outlines the most currently contemplated methods of implementing the invention. This description is not intended to be restrictive, but rather to illustrate the general principles of the invention.

### EXAMPLE 1 - incubation test

An incubation test of the fertiliser composition according to the invention was carried out under controlled conditions. A very acidic soil taken from the arable layer, belonging to the agronomic category of medium soils, was used for the test.

The control sample contained only soil and the test sample contained soil with the addition of the composition according to the invention (in an amount that balances the hydrolytic acidity of the soil) comprising 94.8% of the carbonate-clay powder, 5% of the organic additives and 0.2% of the sulphate sulphur. The organic additives were in the form of sewage sludge and the sulphate sulphur was waste calcium sulphate.

The samples were prepared in four replicates. The soil with the test composition or the control sample was thoroughly mixed and then placed in plastic containers. During incubation, the moisture content of the sample was maintained initially at 50% MPW and then at 40% MPW, replenishing losses systematically with distilled water to a constant weight. Incubation was carried out at room temperature, between 20±2°C.

The experiment was conducted for approximately 90 days. During this period, soil samples were taken for chemical analyses: on the day the experiment was set up and at approximately monthly intervals during the incubation.

The following analyses were planned to be carried out in the soil samples collected and the media obtained: pH in 1M KCl and aqueous suspension (sample:solution, 1:2.5, m:V), electrolytic conductivity in aqueous suspension (sample:solution, 1:2.5, m:V) by potentiometric method, organic carbon content by Tiurin's oxidation method and bioavailable forms of macronutrients and trace elements, including those potentially toxic to plants by Mehlich 3. The biological activity of the samples was assessed by determining the activity of dehydrogenase enzymes.

Table 1 shows the results of the measurements carried out.

**Table. 1 Results of measurements**

| **Parameter** | **Time point** | **Control** | **Test sample** |
|---|---|---|---|
| pH in 1M KCl | month 0 | 4.08 | 10.30 |
| | month 1 | 4.39 | 7.89 |
| | month 2 | 4.12 | 7.81 |
| | month 3 | 3.87 | 7.62 |
| electrolytic conductivity (mS·cm⁻¹) | month 0 | 0.25 | 2.88 |
| | month 3 | 0.63 | 5.11 |
| organic carbon (g C·kg⁻¹ s.m.) | month 0 | 8.44 | 14.16 |
| | month 1 | 7.09 | 8.65 |
| | month 3 | 7.97 | 9.50 |
| activity of dehydrogenase enzymes (µg TPF·g⁻¹ s.m.·h⁻¹) | month 0 | 28.34 | 54.40 |
| | month 1 | 27.96 | 110.71 |
| | month 2 | 14.17 | 134.13 |
| | month 3 | 22.52 | 64.75 |
| Ca (g Ca.kg⁻¹ s.m.) | month 0 | 1.0 | 12.5 |
| | month 1 | 1.0 | 12.0 |
| | month 3 | 0.5 | 16.5 |
| P (mg P·kg⁻¹ s.m.) | month 0 | 152 | 196 |
| | month 1 | 161 | 211 |
| | month 3 | 82 | 388 |
| K (mg K·kg⁻¹ s.m.) | month 0 | 139 | 75 |
| | month 1 | 144 | 73 |
| | month 3 | 105 | 145 |
| Mg (mg Mg·kg⁻¹ s.m.) | month 0 | 96 | 110 |
| | month 1 | 97 | 101 |
| | month 3 | 104 | 115 |
| S (mg S·kg⁻¹ s.m.) | month 0 | 15 | 420 |
| | month 1 | 14 | 431 |
| | month 3 | 9 | 741 |
| Na (mg Na·kg⁻¹ s.m.) | month 0 | 97 | 471 |
| | month 1 | 91 | 409 |
| | month 3 | 91 | 410 |
| Fe (mg Fe·kg⁻¹ s.m.) | month 0 | 1007 | 407 |
| | month 1 | 998 | 506 |
| | month 3 | 626 | 508 |
| Mn (mg Mn·kg⁻¹ s.m.) | month 0 | 218 | 153 |
| | month 1 | 199 | 205 |
| | month 3 | 138 | 211 |
| Zn (mg Zn·kg⁻¹ s.m.) | month 0 | 39 | 24 |
| | month 1 | 33 | 27 |
| | month 3 | 36 | 43 |
| Cu (mg Cu·kg⁻¹ s.m.) | month 0 | 8.5 | 5.5 |
| | month 1 | 8.5 | 5.5 |
| | month 3 | 5.8 | 7.9 |
| Ni (mg Ni·kg⁻¹ s.m.) | month 0 | 3.06 | 1.18 |
| | month 1 | 1.92 | 1.24 |
| | month 3 | 1.78 | 1.90 |
| Cr (mg Cr·kg⁻¹ s.m.) | month 0 | 1.55 | 0.26 |
| | month 1 | 0.69 | 0.75 |
| | month 3 | 0.49 | 1.23 |
| Pb (mg Pb·kg⁻¹ s.m.) | month 0 | 204 | 104 |
| | month 1 | 201 | 120 |
| | month 3 | 150 | 173 |
| Cd (mg Cd·kg⁻¹ s.m.) | month 0 | 0.98 | 0.64 |
| | month 1 | 1.05 | 0.71 |
| | month 3 | 0.89 | 1.16 |

The results obtained show that the composition according to the invention allows alkalinisation of the soil to the desired extent without the risk of over-alkalisation. Furthermore, the addition of the composition according to the invention increased the organic carbon content of the soil and the activity of dehydrogenases, which can be attributed mainly to the effect of the organic additives. An increased content of macronutrients, including sulphur, and no dangerous increase in trace elements were also observed.

### EXAMPLE 2 - agglomeration test

This example relates to an agglomerated multi-ingredient fertilizer according to the invention in the form of a pellet containing the composition according to the invention in the form of a pellet.

An agglomerated multi-ingredient fertilizer according to the invention was made in the form of a pellet comprising the carbonate-clay powder, the organic additives, and the sulphate sulphur in a mass ratio of 4:1:0,1275. The organic additives were in the form of sewage sludge and the sulphate sulphur was waste calcium sulphate.

Standard solutions known in the prior art were used for pelletization, obtaining pellets with a diameter of 6 mm.

A pellet with a moisture content (Mₐᵣ) of 5.7% ± 0.2%, a durability (DU) of 62.8% ± 0.3% and a bulk density (BDₐᵣ) of 839 ± 2 kg·m⁻³ was obtained.

The pH value, electrolytic conductivity and leachability of the components from the agglomerates were evaluated according to EN 12457-2. Distilled water was used as the extractant, maintaining a water to agglomerate ratio of 10 : 1 (v/m), and extraction was carried out over 24 hours. The pH and electrical conductivity were shown to be 9.83 and 4.047 mS·cm⁻¹ respectively.

The content of each element in the agglomerate extract is shown in Table 2.

**Table 2. Content of elements in the agglomerate extract**

| **Element** | **Content** |
|---|---|
| Ca (g·kg⁻¹) | 3.65 |
| P (mg·kg⁻¹) | 86.9 |
| K (mg·kg⁻¹) | 119.9 |
| Mg (mg·kg⁻¹) | 2.11 |
| Na (mg·kg⁻¹) | 1.53 |
| Fe (mg·kg⁻¹) | 1.95 |
| Mn (mg·kg⁻¹) | 0.318 |
| Zn (mg·kg⁻¹) | 0.37 |
| Cu (mg·kg⁻¹) | 7.99 |
| Ni (mg·kg⁻¹) | 0.74 |
| Cr (mg·kg⁻¹) | 0.13 |
| Pb (mg·kg⁻¹) | 0.11 |
| Cd (mg·kg⁻¹) | 0.028 |

The pH value and electrical conductivity of the agglomerate extracts allow neutralisation of the acidified soil pH. The leachability of most of the components after 24 hours of water- agglomerate contact is relatively high, which will ensure that plants meet their nutrient and fertiliser requirements for these components.

## Claims

1. A composition of a multi-ingredient fertilizer, **characterized in that** it comprises:
at least 75 wt% of a carbonate-clay powder,
at least 5 wt% of organic additives, and
at least 0.2 wt% of sulphate sulphur.

2. The composition of the multi-ingredient fertilizer according to claim 1, comprising:
94.8 wt% of the carbonate-clay powder,
5 wt% of the organic additives, and
0.2 wt% of sulphate sulphur.

3. The composition of the multi-ingredient fertilizer according to claim 1, comprising the carbonate-clay powder, the organic additives, and the sulphate sulphur in a mass ratio of 4:1:0.1275.

4. The composition of the multi-ingredient fertilizer according to any of previous claims, wherein the carbonate-clay powder is ground to a grain size of less than 100 microns.

5. The composition of the multi-ingredient fertilizer according to any of previous claims, wherein the organic additives are sewage sludge or digestate.

6. The composition of the multi-ingredient fertilizer according to any of previous claims, wherein the sulphate sulphur is calcium sulphate.

7. An agglomerated multi-ingredient fertilizer comprising the composition of the multi-ingredient fertilizer according to any of previous claims.

8. The agglomerated multi-ingredient fertilizer according to claim 7, wherein the agglomerated multi-ingredient fertilizer is a pelletized multi-ingredient fertilizer.

9. The agglomerated multi-ingredient fertilizer according to claim 7, wherein the agglomerated multi-ingredient fertilizer is a granulated multi-ingredient fertilizer.

10. A method for producing the agglomerated multi-ingredient fertilizer according to claim 7, comprising agglomerating the composition of the multi-ingredient fertilizer.

11. The method according to claim 10, comprising pelletizing the composition of the multi-ingredient fertilizer.

12. The method according to claim 10, comprising granulating the composition of the multi-ingredient fertilizer.
